(19) Europäisches Patentamt
European Patent Office
Office européen des brevets

(11) **EP 3 858 887 A1**

(12) # EUROPEAN PATENT APPLICATION
published in accordance with Art. 153(4) EPC

(43) Date of publication:
**04.08.2021 Bulletin 2021/31**

(21) Application number: **19868050.6**

(22) Date of filing: **25.09.2019**

(51) Int Cl.:
**C08G 63/183** (2006.01)     **C08J 5/16** (2006.01)
**C08J 5/18** (2006.01)

(86) International application number:
**PCT/JP2019/037662**

(87) International publication number:
**WO 2020/067193 (02.04.2020 Gazette 2020/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2018  JP 2018184650**
**22.03.2019  JP 2019054872**
**30.03.2019  JP 2019069490**

(71) Applicant: **Unitika Ltd.**
**Amagasaki-shi, Hyogo 660-0824 (JP)**

(72) Inventors:
• **AKAMATSU, Ken**
**Uji-shi, Kyoto 611-0021 (JP)**

• **HAMAMOTO, Akiko**
**Uji-shi, Kyoto 611-0021 (JP)**
• **ASHIHARA, Hiroshi**
**Uji-shi, Kyoto 611-0021 (JP)**
• **KATO, Makoto**
**Uji-shi, Kyoto 611-0021 (JP)**

(74) Representative: **Müller-Boré & Partner**
**Patentanwälte PartG mbB**
**Friedenheimer Brücke 21**
**80639 München (DE)**

(54) **POLYESTER FILM, AND METHOD FOR MANUFACTURING SAME**

(57)     [Problem] In particular, to provide a sealant film that can maintain seal strength and also has a high piercing strength and can decrease the occurrence of pinholes even when used for a long period of time in a high-temperature environment.

[Solution] The stretched polyester-based film has a melting point of 155°C to 210°C and a density of 1.320 to 1.380.

[Fig. 1]

EP 3 858 887 A1

**Description**

[Technical Field]

The present invention relates to a stretched polyester-based film that can be particularly suitably used for a sealant film or the like.

[Background Art]

A laminated film obtained by using a stretched film as a base film and laminating a sealant film thereon has been used as a packaging material to be used for many distribution articles such as foods, pharmaceuticals, and industrial products.

Various synthetic resins are used as the resin used for the sealant film, and among them, polyolefin-based resins such as polyethylene, polypropylene, and polyethylene/polypropylene copolymers are widely used due to their high heat-seal strength, strength of the material itself, and the like.

However, a sealant film made of a polyolefin-based resin has a drawback that it has a low lamination strength with the base film and also easily adsorbs components consisting of organic compounds such as fats and oils and fragrances. Therefore, a sealant layer made of a polyolefin-based resin may not be suitable for packaging pharmaceuticals, quasi-drugs, cosmetics, general chemical substances (detergents, etc.), and the like.

As a solution to such a problem, polyester-based films for a sealant, which are configured of a polyester resin including ethylene terephthalate as a main component and satisfy a specific requirement, have been proposed (Patent Literature 1, Patent Literature 2).

However, the polyester-based film of Patent Literature 1 has a high heat shrinkage rate, and when left in a high-temperature environment, the sealant film may shrink and the original shape may not be maintained. In the polyester-based film of Patent Literature 2, the seal strength also may not be sufficiently maintained when the film is used for a long period of time in a high-temperature environment.

In recent years, the number of cases where a sealant film is used in a non-food field, such as a heat insulating material used for building materials or the like, has been increasing. In general, such a heat insulating material is one in which a core material such as glass wool is enclosed inside an exterior material. In this case, in order to obtain higher heat insulating property, some insulating materials have a sealed structure in which the inside is evacuated. In order to maintain the heat insulating property of such a vacuum heat insulating material for a long period of time, it is necessary to maintain the vacuum state thereinside for a long period of time. Therefore, the exterior material of the vacuum heat insulating material is required to have both excellent gas barrier property and pinhole resistance.

In the exterior material of the vacuum heat insulating material, a sealant film is used on the innermost surface of the exterior material (bag) that encloses the core material, and the core material is sealed by melting and fusing a part of the sealant film. Meanwhile, since the sealant film outside the melted region of the sealant film comes into contact with the core material, the film is required to have anti-pinhole properties to the core material. Since the end portion of a fibrous substance such as glass wool, which is usually used as a core material, has a piercing force like a needle, where the exterior material is pierced thereby, the vacuum state cannot be maintained.

Thus, the sealant film to be used as the outer layer material of a heat insulating material (in particular, a vacuum heat insulating material) is required to have the performance making it possible to sufficiently maintain seal strength in the sealing region when used for a long period of time in a high-temperature environment, and also to have excellent pinhole resistance in a non-sealing region. However, presently, a sealant film having both of these properties has not yet been developed.

[Citation List]

[Patent Literature]

[Patent Literature 1] WO 2014/175313
[Patent Literature 2] Japanese Patent Application Publication No. 2017-165059

[Summary of Invention]

[Technical Problem]

Therefore, a main object of the present invention is to solve the above-mentioned problems, and in particular, to provide a sealant film that can maintain seal strength and also has a high piercing strength and can reduce the occurrence of pinholes even when used for a long period of time in a high-temperature environment.

[Solution to Problem]

As a result of diligent research conducted to solve such a problem, the present inventors have found that a stretched polyester-based film having property values can be obtained by a specific manufacturing method, and this finding led to the completion of the present invention.

That is, the present invention relates to the following polyester-based film and a method for manufacturing the same.

1. A stretched polyester-based film including a polyester resin, wherein

(1) the polyester resin includes terephthalic acid as an acid component and ethylene glycol as a glycol component;
(2) the melting point is 155°C to 210°C; and
(3) the density is 1.320 to 1.380.

2. The stretched polyester-based film according to clause 1, wherein a glass transition temperature is 30°C to 70°C.

3. The stretched polyester-based film according to clause 1 or 2, wherein a thickness unevenness A calculated by a following formula (1):

$$\text{Thickness unevenness A (\%)} = [(Tmax - Tmin)/Tave] \times 100 \quad \dots \quad (1)$$

(here, Tmax indicates a maximum thickness in four directions (0°, 45°, 90° and 135°) of the polyester film, Tmin indicates a minimum thickness in the four directions (0°, 45°, 90° and 135°) of the polyester film, and Tave indicates an average thickness in the four directions (0°, 45°, 90° and 135°) of the polyester film) is 10% or less.

4. The stretched polyester-based film according to any one of clauses 1 to 3, wherein a breaking strength at elongation is 110 MPa or more.

5. The stretched polyester-based film according to any one of clauses 1 to 4, wherein a dry heat shrinkage rate in TD and MD directions is 6.0% or less.

6. The stretched polyester-based film according to any one of clauses 1 to 5, wherein a piercing strength is 0.50 N/$\mu$m or more.

7. The stretched polyester-based film according to any one of clauses 1 to 6, wherein a seal strength after heat treatment at 120°C for 10 days is 4.5 N/cm or more.

8. The stretched polyester-based film according to any one of clauses 1 to 7, further including 1,4-butanediol as the glycol component.

9. The stretched polyester-based film according to any one of clauses 1 to 8, wherein
in the polyester resin,

(a) terephthalic acid is contained in an amount of 80 mol% to 100 mol% of the total amount of 100 mol% of all acid components in the polyester resin; and
(b) ethylene glycol is contained in an amount of 10 mol% to 85 mol% of the total amount of 100 mol% of all glycol components in the polyester resin.

10. The stretched polyester-based film according to any one of clauses 1 to 9 which is used for a sealant.

11. A laminated film comprising the stretched polyester-based film according to any one of clauses 1 to 10 and another layer, the stretched polyester-based film being arranged in an outermost layer.

12. A package including the stretched polyester-based film according to any one of clauses 1 to 10, wherein the stretched polyester-based film is heat-sealed each other with contents filled in the package.

13. The package according to clause 12, wherein the inside of the package is vacuum.

14. The package according to clause 12 or 13, wherein the contents include a fibrous substance and the package is used as a heat insulating material.

15. A method for manufacturing a polyester-based film according to any one of clauses 1 to 10 from an unstretched sheet including a polyester resin, the method comprising:

a step of stretching the unstretched sheet so that a total stretching ratio (X × Y), which is a mathematical product of a stretching ratio (X) in a sheet flow (MD) direction and a stretching ratio (Y) in a sheet width (TD) direction, satisfies 9.8 to 12.0 or 12.0 to 16.5.

16. The manufacturing method according to clause 15, wherein the stretching is simultaneous biaxial stretching.

17. The manufacturing method according to clause 15 or 16, further comprising a pre-stretching step of stretching the unstretched sheet in advance in the MD direction at a ratio of 1.05 times to 1.20 times prior to stretching.

[Advantages of Invention]

According to the present invention, it is possible to provide a sealant film that has high seal strength even when used for a long period of time in a high-temperature environment and also has a high piercing strength and can decrease the occurrence of pinholes. In particular, since the film of the present invention satisfies specific film property values, the film can effectively exhibit excellent pinhole resistance and blocking resistance even when used for a long period of time in a high-temperature environment.

The polyester-based film of the present invention having such characteristics can be suitably used for various applications in which the above-mentioned properties are particularly required. For example, the film can be used as a packaging material (exterior material and the like) for various products such as foods, pharmaceuticals, quasi-drugs, cosmetics, detergents, and electronic parts, and can also be effectively used as a constituent member of a heat insulating material. More specifically, the film can be used as a heat insulating (especially vacuum heat insulating) packaging material for building materials and also, for example, for refrigerators, freezers, freezer containers, vending machines, showcases, cooler boxes, pots, air conditioner outdoor units, and the like. When used as a heat insulating material, the film can be effectively used as a sealant layer (that is, a sealant layer of an exterior material) that constitutes the inner surface (a surface that comes into direct contact with a core material) of a package in which the core material (for example, a fibrous material such as glass wool) is filled and sealed with the exterior material. In particular, the film can be advantageously used as a sealant layer constituting the inner surface of the package of a vacuum heat insulating material in which the inside of the package enclosing the core material is evacuated.

[Brief Description of Drawings]

[Fig. 1]

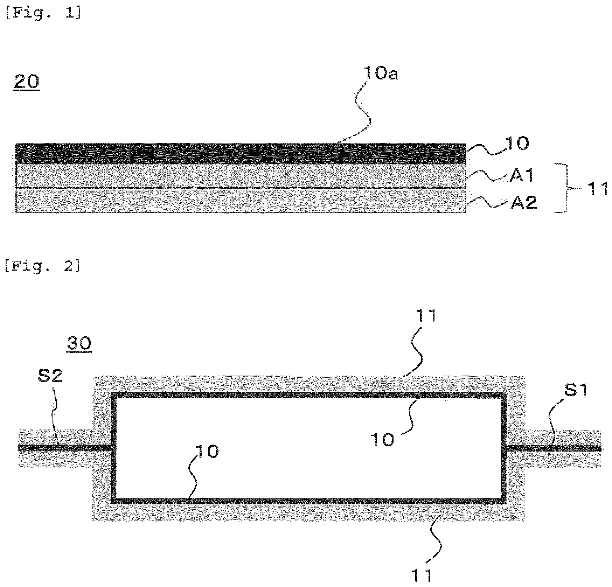

Fig. 1 is a schematic view showing a configuration example of a laminated film including the polyester-based film of the present invention.
[Fig. 2]
Fig. 2 is a schematic view of a bag using a laminated film including the polyester-based film of the present invention.
[Fig. 3]

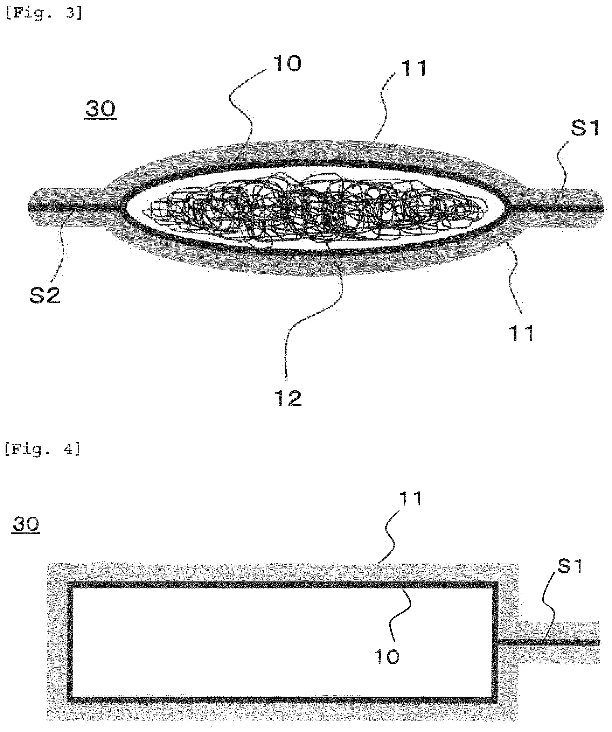

Fig. 3 is a schematic view showing a state in which a fibrous substance is packaged in a bag using a laminated film including the polyester-based film of the present invention.
[Fig. 4]
Fig. 4 is a schematic view of a bag using a laminated film including the polyester-based film of the present invention.
[Fig. 5]

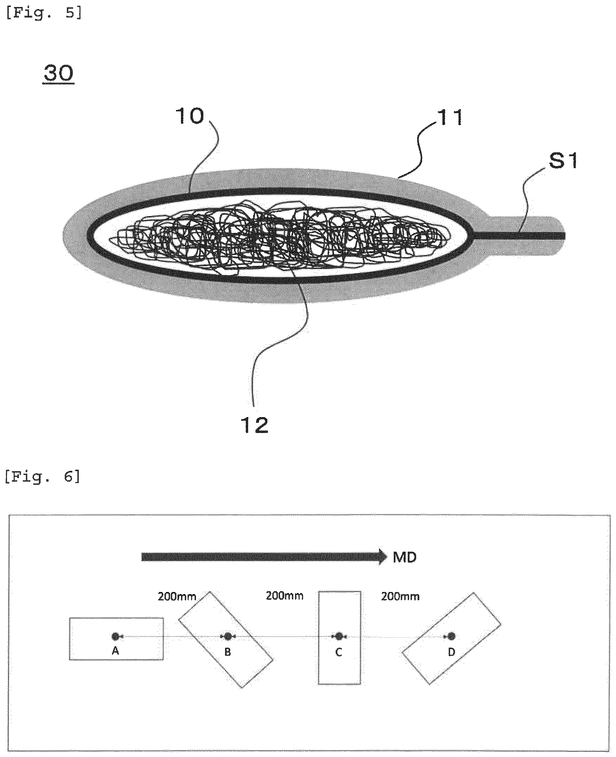

Fig. 5 is a schematic view showing a state in which a fibrous substance is packaged in a bag using a laminated film including the polyester-based film of the present invention.
[Fig. 6]
Fig. 6 is a schematic view showing a sampling method of a sample for measurement in the measurement of breaking strength at elongation in Test Example 1.
[Fig. 7]

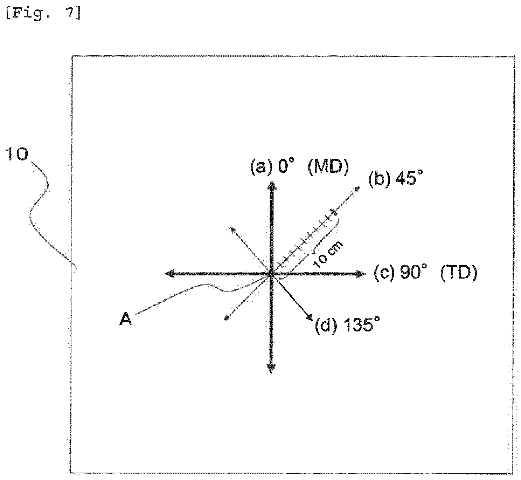

Fig. 7 is a schematic view showing a sampling method of a sample for measurement in the measurement of thickness unevenness in Test Example 1. Fig. 7 shows a case where the direction of 45 degrees is measured clockwise from the MD.

[Description of Embodiments]

1. Polyester-based Film

The polyester-based film of the present invention (the film of the present invention) is a stretched polyester-based film including a polyester resin, wherein

(1) the polyester resin includes terephthalic acid as an acid component and ethylene glycol as a glycol component;
(2) the melting point is 155°C to 210°C; and
(3) the density is 1.320 to 1.380.

1-1. Material and Composition of the Film of the Present Invention

The film of the present invention includes a specific polyester resin (polyester resin of the present invention) as a main component. The content ratio of the polyester resin of the present invention in the film of the present invention is usually 70% by mass or more, particularly 80% by mass or more, and of these, most preferably 90% by mass or more. The upper limit of the content ratio is not particularly limited, but usually can be about 100% by mass. Therefore, the amount can be set in the range of, for example, 95% by mass to 100% by mass. In addition, the film of the present invention may include other components, as necessary, in a range that does not substantially adversely affect the advantages of the present invention.

a) Polyester Resin of the Present Invention

The polyester resin of the present invention preferably includes 80 mol% to 100 mol%, and more preferably 90 mol% to 100 mol% of terephthalic acid in 100 mol% of the total amount of all acid components in the resin. When the amount of terephthalic acid is less than 80 mol% of all acid components, the crystallinity tends to decrease, the melting point may not be expressed, and the density tends to decrease. In addition, it becomes difficult to sufficiently dry the resin, which may cause troubles in the film forming process or reduce the seal strength in a high-temperature environment.

The acid component other than terephthalic acid in the polyester resin of the present invention is not particularly limited, and may be exemplified by dicarboxylic acids such as isophthalic acid, phthalic acid, 2,6-naphthalenedicarboxylic acid, 5-sodium sulfoisophthalic acid, oxalic acid, succinic acid, adipic acid, sebacic acid, azelaic acid, dodecanedioic acid, dimer acid, maleic anhydride, maleic acid, fumaric acid, itaconic acid, citraconic acid, mesaconic acid, and cyclohexanedicarboxylic acid, in addition to 4-hydroxybenzoic acid, $\varepsilon$-caprolactone, lactic acid or the like. Further, two or more of these copolymerization components can be used in combination. Among them, isophthalic acid is preferably included from the viewpoint of a preferable glass transition temperature range.

The polyester resin of the present invention includes ethylene glycol as a glycol component. The amount of ethylene glycol is not limited, but is usually preferably 10 mol% to 85 mol%, particularly 20 mol% to 80 mol%, and of these, most preferably 30 mol% to 70 mol% in 100 mol% of the total amount of all glycol components in the resin. When the amount of ethylene glycol is less than 10 mol% or more than 85 mol% of all glycol components, the melting point may be high, heat sealing may be difficult, and the seal strength may be lowered.

Further, the polyester resin of the present invention preferably further includes 1,4-butanediol as a glycol component. The amount of 1,4-butanediol is not limited, but is preferably 15 mol% to 90 mol%, particularly 20 mol% to 80 mol%, and of these, most preferably 30 mol% to 70 mol% in 100 mol% of the total amount of all glycol components in the resin. Where the amount of 1,4-butanediol is less than 15 mol% or more than 90 mol% of all glycol components, the melting point may be high, heat sealing may be difficult, and the seal strength may be lowered.

The polyester resin of the present invention may include a glycol component other than ethylene glycol and 1,4-butanediol as long as they do not substantially adversely affect the advantages of the present invention. Examples of such glycol component include aliphatic glycols such as 1,4-cyclohexanedimethanol, 1,2-propylene glycol, 1,3-propylene glycol, diethylene glycol, tetraethylene glycol, 1,5-pentanediol, and 1,6-hexanediol; polyalkylene glycols such as polyethylene glycol, triethylene glycol, polytetramethylene glycol; and glycols obtained by adding ethylene oxide to these glycols, and the like. Examples of polyhydric alcohols other than glycols include trimethylolmethane, trimethylolethane, trimethylolpropane, pentaerythritol, glycerol, hexanetriol and the like. Other examples include phenols such as hydroquinone, 4,4'-dihydroxybisphenol, 1,4-bis($\beta$-hydroxyethoxy)benzene, bisphenol A, 2,5-naphthalenediol, or the like.

Method for Manufacturing Polyester Resin of the Present Invention

A method for manufacturing the polyester resin of the present invention is not particularly limited, and production conditions of known polyester resin can be employed in addition to the composition of the polyester resin of the present invention.

In particular, in the present invention, the polyester resin of the present invention can be suitably manufactured by a manufacturing method including, for example, 1) a step of obtaining an esterification reaction product by subjecting a raw material including an ester compound, an acid component and a glycol component to an esterification or transesterification reaction at a temperature of 220°C to 280°C (first step), and 2) a step of adding a glycol component to the esterification reaction product and carrying out a polycondensation reaction at a temperature of 230°C to 280°C under reduced pressure (second step).

Further, a method can be also employed in which the above manufacturing method further includes, depending on the purpose or application, after the second step, 3) a step of adding an acid component or a glycol component to the polymer obtained by the polycondensation reaction and performing a depolymerization reaction at a temperature of 220°C to 280°C (third step). Hereinafter, each step will be described.

First Step

In the first step, an esterification reaction product is obtained by subjecting a raw material including an ester compound, an acid component and a glycol component to an esterification or transesterification reaction at a temperature of 220°C to 280°C.

The ester compound is not particularly limited, and for example, bis($\beta$-hydroxyethyl) terephthalate can be preferably used. Further, these ester compounds may be in the form of a monomer, but may be oligomers or the like. As the acid component and the glycol component, those shown above can be used respectively.

The blending ratio of the acid component and the glycol component is not particularly limited as long as it is close to the theoretical ratio of reaction amounts of the two so that the desired esterification reaction product can be obtained, but usually the acid component:glycol component = 1:0.9 to 1:1.1 in molar ratio.

The reaction temperature is usually about 220°C to 280°C, preferably 250°C to 280°C. The pressure is not limited, but is preferably reduced. For example, the pressure can be about 0.01 hPa to 13.3 hPa. The reaction time can be set, as appropriate, depending on the reaction temperature and the like, and can be set to obtain a predetermined intrinsic viscosity in, for example, about 8 hours (for example, about 7 hours to 9 hours).

Second Step

In the second step, a glycol component is added to the esterification reaction product, and a polycondensation reaction is carried out at a temperature of 230°C to 280°C under reduced pressure.

As the glycol component to be added, all the remaining glycol components after the first step are used. A method of distributing the glycol components in the first step and the second step is not particularly limited, but in order to efficiently perform the reaction between the esterification reaction product with each glycol component, the distribution is preferably carried out according to a kind of glycol component to be used. For example, when ethylene glycol and 1,4-butanediol are used as the glycol components, ethylene glycol can be added to the esterification reaction product in the first step, and 1,4-butanediol can be added in the second step. In the reverse mode, 1,4-butanediol can be added to the esterification reaction product in the first step, and ethylene glycol can be added in the second step.

It is usually desirable to carry out the polycondensation reaction in the presence of a polycondensation catalyst. As the catalyst, the same catalyst as that used in a general polycondensation reaction can be used. For example, compounds of metals such as titanium, antimony, germanium, tin and cobalt are used. These can be used alone or in combination of two or more. In the present invention, among these, titanium compounds are preferable.

The reaction temperature is usually about 230°C to 280°C, preferably 250°C to 280°C The reaction may be performed under a reduced pressure, particularly preferably under a reduced pressure of about 13.3 hPa, and more preferably 0.01 hPa to 5 hPa. The reaction time can be set, as appropriate, according to the reaction temperature and the like, and can be set to obtain a predetermined intrinsic viscosity in, for example, about 4 hours (for example, about 3 hours to 5 hours).

Third Step

In the third step, an acid component or a glycol component is added to the polymer obtained by the polycondensation reaction, and the depolymerization reaction is carried out at a temperature of 220°C to 280°C. In this case as well, it is preferable to use a polycondensation catalyst as in the case of the second step.

b) Components Other Than the Polyester Resin of the Present Invention

The film of the present invention may include other components so as to not adversely affect the advantages of the present invention. For example, in addition to resin components other than polyester resin, the film may include one or two or more additives such as a lubricant, a bending pinhole improver, a pigment, an antioxidant, a UV absorber, a preservative, and an antistatic agent.

In particular, the film of the present invention preferably includes an antioxidant within a range in which the film properties are not impaired. For example, a hindered phenol-based antioxidant can be exemplified by 1,3,5-tris(3,5-di-t-butyl-4-hydroxybenzyl)isocyanurate, 1,1,3-tri(4-hydroxy-2-methyl-5-t-butylphenyl)butane, 1,1-bis(3-t-butyl-6-methyl-4-hydroxyphenyl)butane, 3,5-bis(1,1-dimethylethyl)-4-hydroxybenzenepropanoic acid, pentaerythrityltetrakis (3,5-di-t-butyl-4-hydroxyphenyl)propionate, 3-(1,1-dimethylethyl)-4-hydroxy-5-methyl-benzylpropanoic acid, 3,9-bis[1,1-dimethyl-2-[(3-t-butyl-4-hydroxy-5-methylphenyl)propionyloxy]ethyl]-2,4,8,10-tetraoxaspiro[5.5]undecane, 1,3,5-trimethyl-2,4,6-tris (3',5'-di-t-butyl-4'-hydroxybenzyl)benzene, and the like. A phosphorus-based antioxidant can be exemplified by 3,9-bis(p-nonylphenoxy)-2,4,8,10-tetraoxa-3,9-diphosphaspiro[5.5]undecane, 3,9-bis(octadesyloxy)-2,4,8,10-tetraoxa-3,9-diphosphaspiro[5.5]undecane, tri(monononylphenyl)phosphite, triphenoxyphosphine, isodecylphosphite, isoecylphenylphosphite, diphenyl 2-ethylhexylphosphite, dinonylphenylbis(nonylphenyl) ester phosphorus acid, 1,1,3-tris(2-methyl-4-ditridecylphosphite-5-t-butylphenyl)butane, tris(2,4-di-t-butylphenyl)phosphite, pentaerythritol bis(2,4-di-t-butylphenylphosphite), 2,2'-methylenebis(4,6-di-t-butylphenyl) 2-ethylhexylphosphite, and bis(2,6-di-t-butyl-4-methylphenyl)pentaerythritol diphosphite. A thioether-based antioxidant can be exemplified by 4,4'-thiobis[2-t-butyl-5-methylphenol]-bis[3-(dodecylthio)propionate], thiobis[2-(1,1-dimethylethyl)-5-methyl-4,1-phenylene]-bis[3-(tetradecylthio)-propionate], pentaerythritol tetrakis(3-n-dodecylthiopropionate), and bis(tridecyl)thiodipropionate. The antioxidants may be used alone or in combination of two or more.

Further, the film of the present invention preferably includes a lubricant. The lubricant may be either an inorganic lubricant or an organic lubricant, but it is particularly preferable to use an inorganic lubricant. The inorganic lubricant can be exemplified by, but is not limited to, inorganic lubricants (powder) such as silica, alumina, and kaolin. By including an inorganic lubricant, slipperiness can be imparted to the film surface, so that process passability during manufacturing can be improved.

A method of adding various additives is not particularly limited, and examples thereof include a) a method of adding by including in a polyester resin as a raw material, and b) a method of directly adding in an extruder. Either one of the methods may be adopted, or two or more methods may be used in combination.

In particular, when adding an inorganic lubricant, it is preferable to add the lubricant at the stage before film formation (especially at the time of melting). Examples include a) a method of adding in the form of a slurry or powder during polymerization of a polyester resin, b) a method of melt-mixing together with polyester pellets in the form of a slurry or powder when melt-extruding and forming a sheet, c) a method of preparing a masterbatch containing an inorganic lubricant by melt-mixing polyester pellets and the inorganic lubricant, and melt-extruding the masterbatch together with polyester pellets when melt-extruding and forming a sheet. When an inorganic lubricant is thus blended in the stage before stretching, the thermal conductivity of the obtained film tends to be low. The reason is not clear, but it is thought to be due to the following mechanism. That is, in the stretching step, while the polyester resin is stretched, the inorganic lubricant (inorganic particles) is unlikely to follow the stretching, so that fine voids (spaces) are formed between the stretched resin portion and the inorganic particle portion that does not easily follow the stretching. As a result, the voids are considered to have the same thermal conductivity as the air layer, so that the thermal conductivity becomes lower than that of the other resin portions. Therefore, it is considered that the thermal conductivity of the film is lower than that of a film including an organic lubricant in which voids are not generated.

The amount of these additives is not particularly limited, and can be set, as appropriate, according to the type of additive and the like within a range satisfying the amount of the polyester resin of the present invention shown above.

1-2. Properties of the Film of the Present Invention

The film of the present invention is preferably a stretched film (in particular, a biaxially stretched film). That is, it is desirable that the film has a structure oriented in a specific direction. Such a structure can be suitably formed by the manufacturing method described hereinbelow.

Further, it is desirable that the film of the present invention has each of the following properties.

The melting point (Tm) of the film of the present invention is usually 155°C to 210°C, particularly preferably 160°C to 200°C, and most preferably 165°C to 195°C. Where the melting point is less than 155°C, the breaking strength at elongation, the piercing strength, and the like may decrease. When the melting point exceeds 210°C, the seal strength and the like tend to decrease.

The density of the film of the present invention is usually 1.320 $g/cm^3$ to 1.380 $g/cm^3$, particularly preferably 1.325 $g/cm^3$ to 1.370 $g/cm^3$, and among these, preferably 1.330 $g/cm^3$ to 1.365 $g/cm^3$, and most preferably 1.330 $g/cm^3$

to 1.350 g/cm$^3$. When the density of the film of the present invention is less than 1.320 g/cm$^3$, crystallization is low, the piercing strength is lowered, and pinholes are likely to occur. Meanwhile, when the density of the polyester-based film exceeds 1.380 g/cm$^3$, the seal strength in a high-temperature environment is lowered, and the piercing strength is also lowered.

The glass transition temperature (Tg) of the film of the present invention is preferably about 30°C to 68°C, and more preferably 40°C to 60°C from the viewpoint of improving the anti-blocking properties and piercing strength of the film. Where the glass transition temperature is lower than 30°C, it may cause a decrease in the piercing strength, a decrease in the anti-blocking properties, and the like. Meanwhile, where the glass transition temperature exceeds 68°C, the piercing strength may decrease. The glass transition temperature can be adjusted, as appropriate, by changing, for example, the copolymerization components of the polyester resin.

The breaking strength at elongation of the film of the present invention is usually preferably 90 MPa or more, particularly preferably 100 MPa or more, and most preferably 110 MPa or more. Where the breaking strength at elongation of the polyester-based film is less than 90 MPa, sufficient seal strength may not be obtained.

The dry heat shrinkage rate of the film of the present invention is preferably 6.0% or less in both the MD direction and the TD direction, particularly preferably 5.5% or less, and among these, most preferably 4.5% or less. Where the dry heat shrinkage rate exceeds 6.0%, the film shrinks during heat sealing, and the quality of the package tends to deteriorate. The lower limit of the dry heat shrinkage rate is not particularly limited, but can be about -0.5%, for example. The dry heat shrinkage rates in the MD direction and the TD direction may be the same or different from each other.

The piercing strength of the film of the present invention is usually preferably 0.40 N/$\mu$m or more, particularly preferably 0.50 N/$\mu$m or more, and among these, most preferably 0.55 N/$\mu$m or more. Where the piercing strength is less than 0.40 N/$\mu$m, pinholes are likely to occur in the film when the contents such as glass wool are sealed, and the film may be unsuitable for applications that require pinhole resistance, such as vacuum heat insulating materials. The upper limit of the piercing strength is not particularly limited, but can be, for example, about 1.0 N/$\mu$m.

The seal strength of the film of the present invention is preferably 4.5 N/cm or more, more preferably 5.0 N/cm or more, and among these, most preferably 7.0 N/cm or more. Where the seal strength is less than 4.5 N/cm, sufficient seal strength cannot be obtained, and the seal portion may be peeled off when the contents are sealed. The upper limit of the seal strength is not particularly limited, but can be, for example, about 60.0 N/cm. The seal strength indicates the result of using a laminated film containing a polyester-based film as a test piece, as shown in a test example described hereinbelow.

The film of the present invention has a seal strength of 4.0 N/cm or more, preferably 5.0 N/cm or more, and among these, most preferably 6.0 N/cm or more after being stored in an atmosphere of 120°C for 10 days as an index showing that the seal strength can be maintained even when the film is used for a long period of time in a high-temperature environment. The upper limit of the seal strength is not particularly limited, but can be, for example, 50.0 N/cm.

The thickness of the film of the present invention is not limited, but is usually about 5 $\mu$m to 40 $\mu$m, particularly preferably 10 $\mu$m to 35 $\mu$m, and most preferably 15 $\mu$m to 35 pm. Where the thickness is less than 5 $\mu$m, it may be difficult to develop the desired seal strength. Further, when the thickness exceeds 40 $\mu$m, the amount of heat transfer derived from the thickness becomes large when the film is used for a vacuum heat insulating material, which may make the film unsuitable for the vacuum heat insulating material.

The film of the present invention preferably has a thickness unevenness of 10% or less, particularly preferably 8% or less, and among these, most preferably 7% or less which is calculated by the following formula in four directions of the film surface as an index indicating that the thickness precision (thickness uniformity) is very high. The lower limit value thereof can be, for example, about 3%, but is not limited to this.

Thickness unevenness (%) = $[(Tmax - Tmin)/Tave] \times 100$ Tmax: Maximum thickness of polyester film in four directions Tmin: Minimum thickness of polyester film in four directions Tave: Average thickness of polyester film in four directions

Where the thickness unevenness calculated above is 10% or less, the variation in the thickness of the film surface becomes very small, and satisfactory seal strength can be maintained for a long period of time even when the film is used as, for example, a vacuum heat insulating material. Where the thickness unevenness exceeds 10%, the thickness precision is low, so that locations with a partially low seal strength appear, which may make the film unsuitable for long-term use as a vacuum heat insulating material.

The four directions of the film surface are the direction of 0 degrees from an arbitrary point A and the directions of 45°, 90°, and 135° clockwise with respect to this direction. Among these, it is preferable that the flow direction (MD) of the film be at 0°.

2. Method for Manufacturing the Film of the Present Invention

A method for manufacturing the film of the present invention is not particularly limited, but for example, a film having the above-mentioned physical properties can be more reliably produced by the following method.

That is, a method for manufacturing a polyester-based film from an unstretched sheet including a polyester resin can be preferably adopted that includes a step of stretching the unstretched sheet so that a total stretching ratio (X × Y), which is a mathematical product of a stretching ratio (X) in a sheet flow (MD) direction and a stretching ratio (Y) in a sheet width (TD) direction, satisfies 9.8 to 12.0 or 12.0 to 16.5.

The unstretched sheet including the polyester resin can be preferably obtained by, for example, molding a melt-kneaded product including the polyester resin into a sheet shape.

In addition to the polyester resin of the present invention, various additives can be added to the melt-kneaded product as needed. Examples of the additives include those described above.

The method for molding the melt-kneaded product itself may be carried out according to a known method. For example, an unstretched sheet, which is a sheet-shaped molded product, can be obtained by loading a raw material including a polyamide resin into an extruder equipped with a heating device, melting by heating to a predetermined temperature, and then extruding the melt-kneaded product with a T-die and cooling and solidifying with a casting drum or the like.

The average thickness of the unstretched sheet is not particularly limited, but is generally about 100 $\mu$m to 750 $\mu$m, and from the viewpoint of reducing the thickness unevenness of the film after stretching, the average thickness is particularly preferably 150 $\mu$m to 500 $\mu$m, and more preferably 200 $\mu$m to 400 $\mu$m. By setting within such a range, the stretching step can be carried out more efficiently.

Next, the unstretched sheet is subjected to a stretching step. The stretching may be either uniaxial stretching or biaxial stretching, but biaxial stretching is preferable from the viewpoint of reducing the aforementioned thickness unevenness in the four directions of the film. In this case, as the biaxial stretching method, either a simultaneous biaxial stretching method or a sequential biaxial stretching method can be used.

The simultaneous biaxial stretching can be performed by, for example, a method of grasping both ends of the unstretched sheet using a tenter and stretching in the flow direction (MD direction) of the sheet and, at the same time, in the width direction (TD direction). By the simultaneous biaxial stretching method, it is possible to obtain a stretched film having a more uniform thickness in the four directions of the film.

In the sequential biaxial stretching method, for example, it is preferable to stretch in at least one direction of MD or TD with a tenter. This makes it possible to obtain a more uniform film thickness. The sequential biaxial stretching using a tenter can be exemplified by (1) a method of stretching in MD by passing an unstretched sheet through a plurality of rolls having different rotation speeds, and then stretching the stretched film in TD with a tenter, (2) a method of stretching an unstretched sheet in MD with a tenter and then stretching the stretched film in TD with a tenter. The method (1) is particularly preferable in terms of physical properties, productivity and the like of the obtained film, or the like. The sequential biaxial stretching using a tenter is advantageous in terms of productivity, installation area, and the like because stretching in MD is performed with rolls, and is advantageous in controlling the film thickness and the like because stretching in TD is performed with a tenter.

Further, in the present invention, it is desirable that the unstretched sheet be pre-stretched (preliminary stretch) in the MD direction prior to the simultaneous biaxial stretching or the sequential biaxial stretching as described above. The stretching ratio of the preliminary stretching is not limited, but is usually about 1.05 times to 1.20 times, more preferably 1.10 times to 1.20 times, and among these, most preferably 1.10 times to 1.15 times. Where the pre-stretching ratio is too low, the orientation imparted by biaxial stretching (in particular, simultaneous biaxial stretching) becomes low, the thickness unevenness increases, and a film having uniform physical properties (for example, tensile strength in the four directions of the film) in the four directions of the film is difficult to obtain. If the pre-stretching ratio is too large, a stretching stress during biaxial stretching (in particular, during simultaneous biaxial stretching) becomes too strong, making it difficult to adjust the crystallinity, and the density may be difficult to control within the range specified in the present invention.

The stretching temperature in the case of the above preliminary stretching is not particularly limited, but can be appropriately set within the range of 35°C to 110°C, particularly preferably 40°C to 100°C, and among these, most preferably 50°C to 90°C.

The specific stretching conditions for simultaneous biaxial stretching or sequential biaxial stretching are not particularly limited, but it is particularly desirable to set the stretching conditions as in (A) and (B) hereinbelow. In particular, in the present invention, it is preferable to adopt the simultaneous biaxial stretching of the following (A) because the thickness unevenness of the obtained stretched film can be further reduced.

(A) The Case of Simultaneous Biaxial Stretching

In connection with the stretching ratio of the simultaneous biaxial stretching, the stretching can be performed so that the MD stretching ratio (X), which is represented by a mathematical product of the stretching ratios in each stage of MD stretching, and the TD stretching ratio (Y) satisfy a total stretching ratio (X × Y) = 9.8 to 12.0 (preferably 9.8 to 11.0). As a result, a stretched film satisfying a predetermined film density and the like can be obtained more reliably.

The stretching magnification ratio (X/Y) of the MD stretching ratio (X) and the TD stretching ratio (Y) is not particularly limited, and is, for example, about 0.90 to 1.15 (preferably 0.95 to 1.10).

The stretching temperature in the stretching step is not particularly limited, but usually can be set, as appropriate, within the range of 35°C to 110°C, particularly preferably 40°C to 100°C, and among these, most preferably 60°C to 90°C.

(B) The Case of Sequential Biaxial Stretching

The stretching is desirably performed so that the stretching magnification ratio (X/Y) of the MD stretching ratio (X) and the TD stretching ratio (Y) in the case of sequential biaxial stretching satisfies 0.70 to 0.90 (particularly 0.70 to 0.85) and the total stretching ratio (X × Y) satisfies 12.0 to 16.5 (particularly 13.0 to 16.0). If either of the above stretching magnification ratio and total stretching ratio is not satisfied, the obtained polyester-based film will not have the density, breaking strength at elongation, and dry heat shrinkage rate within the ranges specified in the present invention. As a result, it is difficult to obtain the polyester-based film of the present invention.

Regarding the stretching temperature, usually the MD stretching is preferably performed at 40°C to 65°C, and particularly preferably at 45°C to 63°C. Further, usually, the TD stretching is preferably performed at 55°C to 90°C, particularly preferably at 60°C to 90°C, and among these, most preferably at 65°C to 90°C. When the stretching temperature in MD or TD is higher than the above range, the stretching orientation is low and the thickness unevenness of the film becomes large, which may make it difficult to obtain a film having uniform physical properties over the entire surface. Where the stretching temperature is lower than the above range, the stretching stress becomes too strong, so that it becomes difficult to adjust the crystallinity, and it may be difficult to control the density within the range specified in the present invention.

In either of the above cases (A) and (B), it is preferable to carry out, as necessary, relaxation heat treatment after completing the biaxial stretching step. As a result, a film that can satisfy the desired film density and the like can be obtained more reliably. The treatment conditions are not particularly limited, but it is desirable to use the following conditions.

The relaxation heat treatment temperature is not limited, but is usually preferably 100°C to 180°C, and more preferably 120°C to 160°C. Where the relaxation heat treatment temperature is less than 100°C, a polyester-based film having a dry heat shrinkage rate within the range required in the present invention may not be obtained. Where the relaxation heat treatment temperature exceeds 180°C, crystallization proceeds significantly, so that the film density within the range specified in the present invention may not be obtained.

A relaxation rate is preferably 3.0% to 10.0%, and more preferably 4.0% to 8.0%. Where the relaxation rate is less than 3.0%, the relaxation effect in the TD direction is small, and the dry heat shrinkage rate in the TD direction may not meet the range specified in the present invention. Where the relaxation rate exceeds 10.0%, the polyester-based film may loosen, and the film may rub against a heating blowout nozzle in a relaxation heat treatment zone thereby causing scratches on the film surface or wrinkles during winding.

The film of the present invention can be produced in this manner, but it is also possible to produce a laminated film in which the film of the present invention and another layer are laminated. In this case, any of the following methods can be employed: 1) a method including a step of applying a coating liquid for forming another layer to the film of the present invention, 2) a method including a step of adhering the film of the present invention to a film capable of forming another layer, 3) a method of simultaneously laminating the film of the present invention and a melt capable of forming another layer, and the like.

Further, the surface treatment that has been applied to usual films can be applied to the film of the present invention in a range that does not substantially adversely affect the advantages of the present invention. For example, corona discharge treatment, plasma treatment, primer treatment, vapor deposition treatment, and the like can be mentioned. Further, as will be described hereinbelow, it is also possible to impart, as appropriate, functions by laminating another functional layer (oxygen barrier layer, water vapor barrier layer, easy-adhesion coating layer, and the like).

3. Use of the Film of the Present Invention

The film of the present invention may be used as a single layer, or may be used as a multi-layer in which the film of the present invention is laminated in two or more layers. However, from the viewpoint of simplifying the production process, the film of the present invention itself is preferably used in a single layer.

Further, the film of the present invention can be used alone, but it can also be used in a laminated film (laminated body) formed by laminating with other layers. In particular, when it is used as a laminated film, a laminated film (laminated film of the present invention) including the film of the present invention and other layers and having the surface of the polyester-based film exposed on the outermost surface is preferable. As the other layer, at least one of each layer such as a base material layer (support layer), an adhesive layer, a printing layer, a metal vapor-deposited layer, an inorganic vapor-deposited layer, a metal foil, and a primer layer can be used, as appropriate, depending on the application of the laminated film and the like. For each of these layers, materials used in known packaging materials and the like can be applied. For example, as the base material layer, a synthetic resin layer such as a polyester, a polyamide, or a polyolefin can be used.

Embodiments of the laminated film include, for example, a) film of the present invention / base material layer, b) film of the present invention / adhesive layer / base material layer, c) film of the present invention / adhesive layer / base material layer / adhesive layer / base material layer, d) film of the present invention / adhesive layer / metal vapor-deposited layer / base material layer, e) film of the present invention / adhesive layer / metal vapor-deposited layer / base material layer / adhesive layer / metal vapor-deposited layer / base material layer, f) film of the present invention / adhesive layer / inorganic vapor-deposited layer / base material layer, g) film of the present invention / adhesive layer / inorganic vapor-deposited layer / base material layer / adhesive layer / inorganic vapor-deposited layer / base material layer, h) film of the present invention / adhesive layer / metal foil / adhesive layer / base material layer, and the like. Further, a laminated film which includes the configurations a) to h) and in which another layer is laminated on the lower layer and/or the lower layer of those configurations can also be employed. Here, as the above-mentioned "metal vapor-deposited layer / base material layer", a film with a metal vapor-deposited layer can also be employed. Similarly, as the above-mentioned "inorganic vapor-deposited layer / base material layer", a film with an inorganic vapor-deposited layer can also be used.

The thickness of the laminated film can be set, as appropriate, according to the application of the laminated film and the like. For example, when the laminated film is used as a package (heat insulating material) described hereinbelow, the thickness is preferably in the range of about 15 $\mu$m to 80 $\mu$m, and in particular, more preferably 25 $\mu$m to 50 $\mu$m.

Further, the film of the present invention or the laminated film can also take the form of a package (bag). Therefore, the present invention encompasses a package including the film of the present invention, in which the film(s) of the present invention is heat-sealed each other while the contents are filled in the package (package of the present invention). Since the film of the present invention functions as a sealant layer having excellent heat-sealing properties (heat adhesiveness), the contents can be sealed so as to be shielded from the outside air. For example, the inside of the package can be maintained in a reduced pressure or vacuum state.

The configuration of the bag (package) can be exemplified, as shown in Fig. 1, by the form of the laminated film 20 in which another layer 11 (layer A1, layer A2) is laminated on one surface of a film 10 of the present invention. In Fig. 1, the other layer is two layers, but even when three or more layers of the other layer 11 are laminated, a surface 10a (the surface on which the other layer is not laminated) of the film 10 of the present invention is in an exposed state in which the other layer is not laminated on the surface 10a. By leaving the surface 10a exposed in this way, the surface 10a can be caused to function as a sealant layer that can be adhered to another film. In particular, since the film of the present invention is also excellent in heat-sealing property, it is possible to form a bag by heat-sealing the surfaces each other of the film of the present invention of the laminated film of the present invention.

Fig. 2 shows a schematic view of a bag formed of the laminated film of the present invention. In a bag 30 of Fig. 2, two laminated films of the present invention are used, and the bag is formed by heat-sealing the surfaces 10a and 10a of the films 10 and 10 facing each other at the end portions S1 and S2. Fig. 3 shows a bag in which the contents are filled and sealed by the heat seal. Fig. 3 shows a state in which the contents 12 (fibrous substance such as glass wool) are filled inside the bag 30.

Fig. 4 shows a schematic view of another form of the bag formed of the laminated film of the present invention. The bag 30 of Fig. 4 uses one laminated film of the present invention, and the bag is produced by bending in two so that the surface 10a of the film 10 of the present invention is on the inner side and heat-sealing at the end portions S1 of the opposing surfaces 10a each other. Fig. 5 shows a bag in which the contents are filled and sealed by the heat seal. Fig. 5 shows a state in which the contents 12 (fibrous substance such as glass wool) are filled inside the bag 30.

The package of the present invention can be used for various purposes. For example, applications such as heat insulating materials (including heat retaining materials), soundproofing materials, and cushioning materials can be mentioned. These materials can be applied to, for example, home appliances, automobile supplies, medical devices, building materials and the like. In particular, in the package of the present invention, since the film of the present invention is excellent in heat sealability, anti-pinhole properties, and the like, the package can be suitably used as a heat insulating material for packaging a fibrous substance. In particular, the package can be used as a heat insulating material that can be used in a high-temperature atmosphere (for example, in a range of a usage temperature upper limit of 150°C or less).

When the package of the present invention is used as a heat insulating material, the film or the laminated film of the present invention can be used as the film constituting the packaging material, but it is particularly preferable to use the laminated film. Layers to be used in the laminated film can be exemplified by the layers shown hereinabove, but it is particularly preferable to include a metal vapor-deposited layer or a metal vapor-deposited film. As a result, it is possible to more reliably impart a barrier property sufficient to block the permeation of oxygen, water vapor, and the like present in the surrounding environment. For example, a polyester-based film or the like that has been subjected to metal vapor deposition processing can be preferably used. In addition, since a fibrous substance such as glass wool that can form many vacuum layers may be used for the core material (contents), a polyamide film or the like having excellent piercing resistance (pinhole resistance) may be used as the base material to prevent pinholes. A method of laminating the layers is not particularly limited, but it is preferable that the polyester-based film or polyamide-based film used for the outer layer and the polyester-based film of the present invention be bonded via an adhesive layer.

The fibrous substance used as the core material of the heat insulating material of the present invention may be either short fibers or long fibers. Moreover, it may be either synthetic fibers or natural fibers. Further, the same heat insulating material as that used in known heat insulating materials can also be used. In the present invention, for example, in addition to inorganic fibers such as glass wool and rock wool, organic fibers such as cellulose fibers can be mentioned. Fibers similar to those used in known or commercially available heat insulating materials can also be used as these fibrous substances themselves.

Further, the heat insulating material of the present invention can keep the fibrous material sealed by heat-sealing the film of the present invention in a state where the package of the present invention is filled with the fibrous substance. In this case, the pressure inside the package may be normal pressure, reduced pressure, vacuum, increased pressure, or the like, but reduced pressure or vacuum is preferable to obtain higher heat insulating properties. When the inside of the package is reduced in pressure or has a vacuum atmosphere, the fibrous substance inside the package and the inner surface of the package come into contact (adhesion) with each other at high pressure, and as a result, the risk of the fibrous substance piercing the package (laminated film) increases. However, since the package of the present invention has high pinhole resistance, such a risk can be reduced. Further, the atmosphere inside the package is not limited, and for example, in addition to air, an inactive gas (nitrogen gas, argon gas, helium gas, and the like) can be filled.

Examples

Examples and comparative examples will be shown hereinbelow, and the features of the present invention will be described more specifically. However, the scope of the present invention is not limited to the examples.

A. Example A of Simultaneous Biaxial Stretching Example A1

(1) Manufacture of Polyester Resin

A mixed slurry having a molar ratio of EG/TPA of ethylene glycol (hereinafter referred to as "EG") to terephthalic acid (hereinafter referred to as "TPA") of 1.5 was continuously supplied to an esterification reaction can filled with ester compounds composed of bis($\beta$-hydroxyethyl) terephthalate and a polyester low polymer thereof, a reaction was conducted under the conditions of a temperature of 250°C and a pressure of 0.1 MPa with a residence time of 8 hours, and an esterification reaction product having a reaction rate of 95% was continuously obtained (hereinafter referred to as "PET oligomer").

A total of 1657.2 parts by mass of the obtained PET oligomer was transferred to a polycondensation reaction can, and 482.9 parts by mass of 1,4-butanediol was added while adjusting the temperature of the contents of the reaction can to 180°C to 200°C. Then, 1.1 parts by mass of tetrabutyl titanate was added as a polycondensation catalyst. After stirring for 10 minutes, the pressure inside the can was gradually reduced to 1.2 hPa or less after 90 minutes while raising the temperature inside the reaction can to 240°C. The polycondensation reaction was carried out for 4 hours with stirring under these conditions to obtain a polyester resin A having a composition as shown in Table 1.

(2) Manufacture of Polyester-based Film

Agglomerated silica (SY-310P, manufactured by Fuji Silysia Chemical Ltd.) having an average particle diameter of 2.7 $\mu$m was added to the obtained polyester resin A so as to have an amount thereof of 0.075% by mass, melting was performed at a temperature of 230°C, and the melt was extruded from a T-die to form a sheet and cooled by being brought into close contact with a cooling drum having a surface temperature of 18°C to obtain an unstretched sheet having a thickness of 285 $\mu$m.

The obtained unstretched sheet was pre-stretched in the MD direction in a stretch ratio of 1.15 with a roll-type longitudinal stretching machine. Next, the pre-stretched film was supplied to a tenter-type simultaneous biaxial stretching machine, and stretched by the simultaneous biaxial stretching method in the MD direction in a stretch ratio of 3.00 and in the TD direction in a stretch ratio of 3.30. The total stretching ratio (X × Y) of the stretched biaxially stretched film was 11.4. The stretching temperature was 80°C for both the preliminary stretching and the simultaneous biaxial stretching.

Next, after performing a thermal relaxation treatment of 8.0% in the TD direction at a temperature of 150°C × 4 seconds, the film was cooled to room temperature, and one side thereof was subjected to corona discharge treatment followed by winding into a roll to obtain a polyester-based film having a thickness of 25 $\mu$m.

Examples A2 to A10 and Comparative Examples A1 to A8

Polyester-based films having a thickness of 25 $\mu$m were obtained in the same manner as in Example A1 with the exception that the composition of the polyester resin, film stretching, and heat treatment conditions were changed as shown in Tables 1 and 2. In Table 1, "$\epsilon$-CL" indicates $\epsilon$-caprolactone, "NPG" indicates neopentyl glycol, and "CHDM" indicates 1,4-cyclohexanedimethanol.

[Table 1]

| | | Polyester resin | | | | | | |
| | | Acid component | | | Glycol component | | | |
| | | Terephthalic acid | Isophthalic acid | $\epsilon$-CL | Ethylene glycol | 1,4-Butanediol | NPG | CHDM |
| | | mol% | mol% | mol% | mol% | mol% | mol% | mol% |
| Example A | 1 | 100 | 0 | - | 50 | 50 | - | - |
| | 2 | 100 | - | - | 70 | 30 | - | - |
| | 3 | 90 | 10 | - | 60 | 40 | - | - |
| | 4 | 80 | 20 | - | 50 | 50 | - | - |
| | 5 | 100 | 0 | - | 50 | 50 | - | - |
| | 6 | 100 | 0 | - | 50 | 50 | - | - |
| | 7 | 100 | 0 | - | 20 | 80 | - | - |
| | 8 | 100 | 0 | - | 30 | 70 | - | - |
| | 9 | 85 | - | 15 | 45 | 55 | - | - |
| | 10 | 100 | - | - | 83 | - | 17 | - |
| Comparative Example A | 1 | 100 | - | - | 80 | - | 20 | - |
| | 2 | 100 | - | - | 80 | - | - | 20 |
| | 3 | 75 | - | 25 | 45 | 55 | - | - |
| | 4 | 85 | 15 | - | 100 | - | - | - |
| | 5 | 100 | - | - | - | 80 | 20 | - |
| | 6 | 100 | - | - | 80 | 20 | - | - |
| | 7 | 100 | - | - | 70 | 30 | - | - |
| | 8 | 100 | - | - | - | 100 | - | - |

[Table 2]

| | | Stretching, heat treatment step | | | | Total stretching ratio (X × Y) | Stretching magnification ratio (X/Y) | Relaxation heat treatment | |
|---|---|---|---|---|---|---|---|---|---|
| | | | Pre-stretching | Main stretching | | | | | |
| | | Stretching temperature | Stretching ratio (X) | Stretching ratio (X) | Stretching ratio (Y) | | | Temperature | Relaxation rate |
| | | °C | Times | Times | Times | Times | - | °C | % |
| Example A | 1 | 80 | 1.15 | 3.00 | 3.30 | 11,4 | 1.05 | 150 | 8.0 |
| | 2 | 80 | 1.15 | 3.00 | 3.30 | 11.4 | 1.05 | 130 | 8.0 |
| | 3 | 75 | 1.20 | 3.00 | 3.30 | 11.9 | 1.09 | 150 | 5.0 |
| | 4 | 75 | 1.05 | 3.00 | 3.30 | 10.4 | 0.95 | 130 | 5.0 |
| | 5 | 80 | 1.00 | 3.20 | 3.50 | 11.2 | 0.91 | 150 | 8.0 |
| | 6 | 85 | 1.15 | 3.00 | 3.30 | 11.4 | 1.05 | 170 | 5.0 |
| | 7 | 85 | 1.15 | 3.00 | 3.30 | 11.4 | 1.05 | 130 | 3.0 |
| | 8 | 85 | 1.15 | 3.00 | 3.30 | 114 | 1.05 | 150 | 8.0 |
| | 9 | 40 | 1.15 | 3.00 | 3.30 | 11.4 | 1.05 | 150 | 8.0 |
| | 10 | 100 | 1.15 | 3.00 | 3.30 | 11.4 | 1.05 | 180 | 8.0 |
| Comparative Example A | 1 | 75 | 1.15 | 3.00 | 3.30 | 11.4 | 1.05 | 75 | 1.0 |
| | 2 | 80 | 1.15 | 3.00 | 3.30 | 11.4 | 1.05 | 75 | 1.0 |
| | 3 | 45 | 1.05 | 3.00 | 3.30 | 10.4 | 0.95 | 125 | 5.0 |
| | 4 | 85 | 1.15 | 3.00 | 3.30 | 11.4 | 1.05 | 180 | 5.0 |
| | 5 | 40 | 1.10 | 3.00 | 3.30 | 10.9 | 1.00 | 140 | 5.0 |
| | 6 | 75 | 1.15 | 3.10 | 3.30 | 11.8 | 1.08 | 190 | 3.0 |
| | 7 | 75 | 1.30 | 3.00 | 3.30 | 12.9 | 1.18 | 180 | 8.0 |
| | 8 | 35 | 1.15 | 3.00 | 3.30 | 11.4 | 1.05 | 160 | 5.0 |

Test Example 1

The stretched polyester-based films obtained in each example and comparative example were evaluated for the following physical properties. The results are shown in Table 3.

(1) Density of Polyester-based Film

The density of the stretched polyester-based film was measured using a density gradient tube method described in JIS K-7112. As a measurement medium (solution), ligroin (manufactured by Nacalai Tesque, Inc., specific gravity 0.73 at 25°C) and AsahiKlin AK-225 (manufactured by AGC Inc., specific gravity 1.55 at 25°C) were mixed to prepare mixed liquids having a specific gravity of 1.24 and 1.36, respectively. The two liquids were filled in a gradient tube, then the test piece was slowly filled in the gradient tube, and the value was measured after allowing the tube to stand at 25°C for 5 hours. When the specific gravity was larger than 1.35, mixed solutions having a specific gravity of 1.31 and a specific gravity of 1.43, respectively, were prepared and the measurement was performed in the same manner. The measurement was performed three times for each case, and the average value was calculated to obtain the density of the polyester-based film.

(2) Glass Transition Temperature and Melting Point of Polyester-based Film

Using the stretched polyester-based films obtained in examples and comparative examples as measurement samples, DSC manufactured by PerkinElmer, Inc. was used, the temperature was raised at 20°C/min, and the glass transition temperature and melting point of the polyester-based film were measured.

(3) Breaking Strength at Elongation

First, a sample for measurement was prepared. After adjusting the moisture content of the stretched polyester-based film at 23°C × 50% RH for 2 hours, sampling was performed as shown in Fig. 6. That is, an arbitrary position on the film was set as the center point A, and a point 200 mm away from the center point A in the MD direction was set as the center point B. Further, a point 200 mm away from the center point B in the MD direction was designated as the center point C, and a point 200 mm away from the center point C in the MD direction was designated as the center point D. Five samples having a length of 150 mm and a width of 10 mm were collected so that the center point A was at the center of each of the longitudinal direction and the width direction and the MD direction (0°) was the measurement direction. In addition, five samples each having a length of 150 mm and a width of 10 mm were collected in the same manner as in the case of the MD direction with respect to four directions at 45° clockwise from the MD direction (0°) at the center point B, 90° from the MD direction (TD direction), at the center point C, and 135° from the MD direction at the center point D.
For these samples (20 samples in total), a tensile tester ("AG-1S" manufactured by Shimadzu Corporation) equipped with a load cell for 1 kN measurement and a sample chuck was used. The distance between grippers was set to 100 mm, and the strength when the polyester film was ruptured was measured at a tension speed of 500 mm/min. The measurements were carried out with five samples in each direction, and an average value was calculated to obtain the breaking elongation at elongation.

(4) Dry Heat Shrinkage Rate

In a similar manner to that of the sampling method used for the measurement of "(3) Breaking Elongation at Elongation", the sample is sampled by cutting the stretched polyester-based film into strips so as to obtain 150 mm in each measurement direction from the center point A and 10 mm in the direction perpendicular to the measurement direction. The sample was marked with oil-based ink at positions 20 mm inside from both ends in the longitudinal direction of the sample so that the distance between the inner sides of the marks was 110 mm. The sample is moisture-controlled at 23°C × 50% RH for 2 hours (moisture control 1), then exposed to dry air at 110°C for 8 minutes, and then moisture-controlled at 23°C × 50% RH for 2 hours (moisture control 2). The mark interval after moisture control 1 and the mark interval length after moisture control 2 are measured, and the dry heat shrinkage rate is determined by the following formula. The measurement is carried out with 5 samples, and the average value is taken as the dry heat shrinkage rate. As for the resin "having no melting point", the dry heat shrinkage rate was not be measured because the sample was softened at 110°C.

$$\text{Dry heat shrinkage rate (\%)} = \{((\text{Mark interval after moisture control 1}) - (\text{Mark interval after moisture control 2}))/(\text{Mark interval after moisture control 1})\} \times 100$$

(5) Piercing Strength (Pinhole Resistance)

A stretched polyester-based film was fixed to a circular frame with an inner diameter of 30 mmφ under tension, the film was pierced vertically at a speed of 50 mm/min with a needle with a tip diameter of 0.5 mm in the center of the film in an atmosphere with a temperature of 20°C and a relative humidity of 65%, and the strength at the time the sample was ruptured was measured.

(6) Thickness Unevenness

After adjusting the moisture content of the stretched polyester-based film in a 23°C × 50% RH environment for 2 hours, as shown in Fig. 7, 0° direction from an arbitrary center point A of the stretched polyester-based film 10 in the flow direction (MD) of the film was determined, and the thickness was measured by using a thickness gauge (HEIDENHAIN-METRO MT1287 manufactured by Heidenhain) in 10 points at an interval of 10 mm from the center point A in each of the four directions of 0° direction, 45° direction, 90° direction (TD), and 135° direction clockwise from MD, for a total of 40 points.
The thickness unevenness was calculated using the following formula, where the maximum thickness was Tmax, the minimum thickness was Tmin, and the average thickness was Tave in the obtained measured values of 40 points.

$$\text{Thickness unevenness (\%)} = [(\text{Tmax} - \text{Tmin})/\text{Tave}] \times 100$$

(7) Seal Strength (Heat Seal Temperature 220°C)

LX-401A/SP-60 manufactured by DIC Corporation was coated on the polyester film surface of a polyester film (I) having a thickness of 12 μm which has been subjected to aluminum vapor deposition treatment on one side, so that the coating amount was 4 g/m$^2$, and drying was performed at 80°C for 10 seconds. A corona discharge-treated surface of the polyester-based film obtained in each example and comparative example was bonded to the adhesive-coated surface, the adhesive layer was cured by maturing at 40°C for 2 days, and a laminate in which the aluminum vapor-deposited surface, the polyester film (I), the adhesive layer, and the stretched polyester-based film (sealant film) obtained in examples were laminated in this order was obtained.
Using two of the above laminates, the sealant films were put so that they faced each other, and heat-sealed. The heat-sealing conditions were as follows: top surface temperature 220°C, bottom surface temperature 130°C, sealing pressure 1 kg/cm$^2$, and sealing time 2.0 seconds.
The heat-sealed film was cut out as a test piece having a width of 15 mm, and the peel strength was measured using a tensile tester under the conditions of a tensile speed of 300 mm/min, a distance between chucks of 50 mm, and a T-shaped holding in the seal portion. In some cases, during the measurement, the seal portion did not peel off and the film was broken near the seal portion. In such cases, the strength at the time when the film was broken was read. At a practical level, the seal strength at room temperature is required to be 4.5 N/cm or more, preferably 5.0 N/cm or more, and most preferably 7.0 N/cm or more.

(8) Seal Strength (Heat Seal Temperature 200°C)

The heat-sealing conditions were the same as in (7) above, except that the top surface temperature was 200°C, the bottom surface temperature was 130°C, the sealing pressure was 1 kg/cm$^2$, and the sealing time was 2.0 seconds.

(8) Seal Strength After Long-term Storage at High Temperature (120°C, 10 Days)

The films heat-sealed in (7) and (8) above were heat-treated at 120°C for 10 days using a hot air dryer FC-62 (manufactured by Toyo Seiki Seisaku-sho, Ltd.). Then, the peel strength was measured under the same measurement conditions as in (7). At a practical level, the seal strength after long-term storage at high temperature is required to be 4.0 N/cm or more, preferably 5.0 N/cm or more, and most preferably 6.0 N/cm.

(9) Anti-blocking properties

The stretched polyester-based film (sealant film) obtained in each Example A and Comparative Example A was cut into a size of 50 mm × 50 mm, the corona-treated surfaces were put so that they faced each other, 25 mm × 50 mm paper was sandwiched therebetween, and the resulting configuration was allowed to stand for 24 hours under a load of 10 kPa at 30°C. After removing the load and cooling to room temperature, a test piece with a width of 15 mm was cut out, a portion part sandwiching the paper was attached to the upper and lower chuck parts, and the anti-blocking properties between polyester-based films (sealant films) was evaluated by measuring the peel strength using a tensile tester under the conditions of a tensile speed of 300 mm/min, a distance between the chucks of 50 mm, and T-type holding conditions.
In terms of anti-blocking properties, at a practical level, the peel strength is required to be less than 0.3 N/cm, and it is preferable that the peel strength is less than 0.1 N/cm or that peeling occurs before the peel strength measurement with a tensile tester. In addition, "O" in Table 3 is an evaluation relating to a case where the measurement could not be performed because the peel strength was less than 0.1 N/cm or peeling occurred before the peel strength measurement with the tensile tester.

(10) Evaluation of Vacuum Heat Insulating Pouch Under High-temperature Environment

After cutting out the laminate obtained in (7) above to an A4 size, the laminate was half-folded, and the two sides other than the half-cut portion were heat-sealed inside under the same conditions as in (7) above, to prepare a pouch in which one opening was opened. A "Fibermax Board 1600P board" (manufactured by ITM Co., Ltd.) was filled from the opening, and the sealing portion was heat-sealed while degassing using a degassing sealer to prepare a vacuum heat insulating pouch. The obtained vacuum insulating pouch was heat-treated at 120°C for 10 days using a hot air dryer FC-62 (manufactured by Toyo Seiki Seisaku-sho, Ltd.). After that, the pouch was disassembled, and the number of spots that were dyed on the sealant film surface in contact with the Fibermax Board P1600 board using an ageless seal check spray (manufactured by Mitsubishi Gas Chemical Company, Inc.) was counted.
In this evaluation result, at a practical level, the number of dyeing spots needs to be less than 10, preferably less than 5, more preferably 1, and the most preferable number of dyeing spots is 0.

[Table 3]

| | | Properties of polyester-based film | | | | | | | | | | | | | Seal strength (200°C) | | Seal strength (220°C) | | Evaluation of vacuum heat insulating pouch under high-temperature environment |
|---|---|---|---|---|---|---|---|---|---|---|---|---|---|---|---|---|---|---|---|
| | | Tg | Tm | Density | Dry heat shrinkage rate | | Breaking strength at elongation | | | | | Thickness unevenness | Peel strength | Blocking resistance | Normal temp. | Under high-temperature environment (120°C × 10 days) | Normal temp. | Under high-temperature environment (120°C × 10 days) | |
| | | | | | MD | TD | MD | 45° | TD | 135° | Max Min | | | | | | | | |
| | | °C | °C | g/cm³ | % | % | MPa | MPa | MPa | MPa | MPa | % | N/μm | N/cm | N/cm | N/cm | N/cm | N/cm | Number |
| Ex.A | 1 | 49 | 179 | 1.333 | 1.4 | 0.2 | 137 | 142 | 136 | 149 | 13 | 4.0 | 0.57 | O | 9.9 | 8.6 | 9.1 | 7.9 | 0 |
| | 2 | 60 | 193 | 1.339 | 3.4 | 1.3 | 160 | 155 | 180 | 162 | 25 | 4.4 | 0.53 | O | 6.1 | 5.5 | 7.2 | 6.5 | 0 |
| | 3 | 58 | 183 | 1.334 | 2.2 | -0.5 | 122 | 133 | 148 | 134 | 26 | 3.9 | 0.51 | O | 8.8 | 8.0 | 7.5 | 6.6 | 0 |
| | 4 | 31 | 158 | 1.323 | 3.4 | 1.4 | 181 | 182 | 206 | 200 | 25 | 7.1 | 0.62 | 0.15 | 12.1 | 9.0 | 8.9 | 6.8 | 0 |
| | 5 | 49 | 179 | 1.328 | 1.9 | 0.6 | 145 | 160 | 161 | 163 | 18 | 8.6 | 0.65 | O | 10.9 | 8.1 | 8.0 | 5.3 | 0 |
| | 6 | 49 | 179 | 1.343 | 0.5 | -0.5 | 134 | 141 | 152 | 145 | 18 | 4.2 | 0.43 | O | 10.2 | 8.8 | 5.7 | 4.8 | 1 |
| | 7 | 39 | 186 | 1.338 | 3.6 | 1.5 | 164 | 166 | 190 | 189 | 26 | 5.0 | 0.56 | 0.23 | 6.3 | 4.9 | 6.9 | 5.6 | 0 |
| | 8 | 43 | 192 | 1.345 | 0.7 | 0.2 | 103 | 105 | 120 | 94 | 26 | 7.6 | 0.43 | O | 5.5 | 4.1 | 6.2 | 4.3 | 2 |
| | 9 | 29 | 164 | 1.322 | 1.5 | -0.4 | 70 | 74 | 90 | 78 | 20 | 7.4 | 0.41 | 0.39 | 8.0 | 5.6 | 6.7 | 4.5 | 1 |
| | 10 | 70 | 199 | 1.322 | 0.4 | -0.2 | 109 | 108 | 126 | 100 | 26 | 5.4 | 0.46 | O | 4.3 | 4.0 | 5.0 | 4.4 | 2 |
| Comp. Ex. A | 1 | 65 | No mp | 1.305 | - | - | 55 | 60 | 65 | 61 | 10 | 10.3 | 0.12 | O | 13.1 | 7.8 | 10.1 | 6.2 | 11 |
| | 2 | 70 | No mp | 1.310 | - | - | 58 | 59 | 76 | 78 | 20 | 11.7 | 0.09 | O | 14.4 | 8.5 | 11.2 | 6.7 | 15 |
| | 3 | 25 | 153 | 1.322 | 1.0 | 0.0 | 98 | 100 | 86 | 108 | 22 | 7.2 | 0.23 | 0.42 | 10.4 | 7.7 | 8.2 | 5.4 | 6 |
| | 4 | 67 | 216 | 1.362 | 1.5 | -0.1 | 189 | 198 | 203 | 190 | 14 | 4.5 | 0.56 | O | Sealing impossible | Scaling impossible | 0.9 | Sealed portion is peeled | 2 |
| | 5 | 38 | 203 | 1.312 | 7.9 | 6.6 | 187 | 196 | 209 | 189 | 22 | 8.6 | 0.32 | 0.12 | Sealing impossible | Sealing impossible | 5.9 | 3.0 | 5 |

| | | Properties of polyester-based film | | | | | | | | | | | | | | | | | |
|---|---|---|---|---|---|---|---|---|---|---|---|---|---|---|---|---|---|---|---|
| | | Tg | Tm | Density | Dry heat shrinkage rate | | Breaking strength at elongation | | | | | Thickness unevenness | Peel strength | Blocking resistance | Seal strength (200°C) | | Seal strength (220°C) | | Evaluation of vacuum heat insulating pouch under high-temperature environment |
| | | | | | MD | TD | MD | 45° | TD | 135° | Max Min | | | | Normal temp. | Under high-temperature environment (120°C × 10 days) | Normal temp. | Under high-temperature environment (120°C × 10 days) | |
| | | °C | °C | g/cm$^3$ | % | % | MPa | MPa | MPa | MPa | MPa | % | N/μm | N/cm | N/cm | N/cm | N/cm | N/cm | Number |
| | 6 | 65 | 217 | 1.383 | 0.5 | -0.6 | 116 | 131 | 129 | 134 | 18 | 6.7 | 0.30 | O | Sealing impossible | Sealing impossible | 0.7 | Sealed portion is peeled | 6 |
| | 7 | 60 | 193 | 1.386 | 0.2 | -1.0 | 113 | 75 | 76 | 73 | 40 | 6.0 | 0.23 | O | 4.4 | 2.8 | 4.5 | 3.0 | 7 |
| | 8 | 37 | 224 | 1.318 | 1.7 | -0.4 | 161 | 172 | 149 | 177 | 28 | 5.6 | 0.59 | 0.15 | Sealing is impossible | Sealing is impossible | Sealing impossible | Sealing is impossible | - |

EP 3 858 887 A1

The polyester-based films of Examples A1 to A10 had excellent heat sealability even when stored for a long period of time in a high-temperature environment, had high piercing strength, and excelled in pinhole resistance even when were used as a sealant film for a vacuum heat insulating pouch and were stored for a long period of time in a high-temperature environment.

Meanwhile, since the polyester-based films of Comparative Examples A1 and A2 did not crystallize and did not have a melting point, the piercing strength was low and pinholes occurred when the vacuum heat insulating pouch was stored for a long period of time in a high-temperature environment.

The polyester-based film of Comparative Example A3 had a film melting point that did not meet the range specified in the present invention. Accordingly, the piercing strength was low and pinholes occurred when the vacuum heat insulating pouch was stored for a long period of time in a high-temperature environment.

Since the polyester-based films of Comparative Examples A4 and A6 had a film melting point exceeding the range specified in the present invention, the films were inferior in seal strength, and the seal was peeled off after storage for a long period of time at high temperature. The film of Comparative Example 6 was also inferior in piercing strength because the film density exceeded the range specified in the present invention.

For the reason that the polyester-based film of Comparative Example A5 had a film density lower than the range specified in the present invention, the film was inferior in piercing strength, and pinholes were formed when the vacuum heat insulating pouch was stored for a long period of time in a high-temperature environment.

Since the polyester-based film of Comparative Example A7 had a film density that did not meet the range specified in the present invention, the piercing strength was low and pinholes were formed when the vacuum heat insulating pouch was stored for a long period of time in a high-temperature environment.

The polyester-based film of Comparative Example A8 had a film melting point far exceeding the range required in the present invention. As a result, heat sealing was impossible.

B. Example B of Sequential Biaxial Stretching

Example B1

(1) Manufacture of Polyester-based Resin

A mixed slurry having a molar ratio of EG/TPA of terephthalic acid (hereinafter referred to as "TPA") and ethylene glycol (hereinafter referred to as "EG") of 1.5 was continuously supplied to an esterification reaction can filled with ester compounds composed of bis($\beta$-hydroxyethyl) terephthalate and a polyester low polymer thereof, a reaction was conducted under the conditions of a temperature of 250°C and a pressure of 0.1 MPa with a residence time of 8 hours, and an esterification reaction product having a reaction rate of 95% was continuously obtained (hereinafter referred to as "PET oligomer").

A total of 1657.2 parts by mass of the obtained PET oligomer was transferred to a polycondensation reaction can, and 482.9 parts by mass of 1,4-butanediol was added while adjusting the temperature of the contents of the reaction can to 180°C to 200°C. Then, 1.1 parts by mass of tetrabutyl titanate was added as a polycondensation catalyst. After stirring for 10 minutes, the pressure inside the can was gradually reduced to 1.2 hPa or less after 90 minutes while raising the temperature inside the reaction can to 240°C. The polycondensation reaction was carried out for 4 hours with stirring under these conditions to obtain a polyester resin A having a composition as shown in Table 1.

(2) Manufacture of Polyester-based Film

Agglomerated silica (SY-310P, manufactured by Fuji Silysia Chemical Ltd.) having an average particle diameter of 2.7 $\mu$m was added to the obtained polyester resin A so as to have an amount thereof of 0.075 wt%, melting was performed at a temperature of 230°C, and the melt was extruded from a T-die to from a sheet and cooled by being brought into close contact with a cooling drum having a surface temperature of 18°C to obtain an unstretched sheet.

The obtained unstretched sheet was MD stretched at 55°C with a roll-type longitudinal stretching machine so that the MD stretching ratio (X) was 3.40. Subsequently, the ends of the MD-stretched film were gripped by clips of a tenter-type transverse stretching machine, and TD stretching was performed at 65°C so that the TD stretching ratio (Y) was 4.50. The stretching magnification ratio (X/Y) of the biaxially stretched film stretched by the sequential biaxial stretching method was 0.76, and the total stretching ratio (X $\times$ Y) was 15.3.

Next, after performing a heat relaxation treatment of 8.0% in the TD direction at 150°C $\times$ 4 seconds, the film was cooled to room temperature and wound into a roll to obtain a polyester-based film having a thickness of 25 $\mu$m.

Examples B2 to B11 and Comparative Examples B1 to B9

Polyester-based films were obtained in the same manner as in Example B1 except that the composition of the polyester resin and film stretching conditions were changed as shown in Tables 4 and 5. In Tables 1 and 2, "εCL" indicates ε-caprolactone, "NDCA" indicates 2,6-naphthalenedicarboxylic acid, "NPG" indicates neopentyl glycol, and "CHDM" indicates 1,4-cyclohexanedimethanol.

[Table 4]

| Example B or Comparative Example B | Polyester resin | | | | | | | |
|---|---|---|---|---|---|---|---|---|
| | Acid component | | | | Glycol component | | | |
| | Terephthalic acid (mol%) | Isophthalic acid (mol%) | ε-CL (mol%) | NDCA (mol%) | Ethylene glycol (mol%) | 1,4-Butanediol (mol%) | NPG (mol%) | CHDM (mol%) |
| Example 1 | 100 | 0 | 0 | 0 | 50 | 50 | 0 | 0 |
| Example 2 | 100 | 0 | 0 | 0 | 70 | 30 | 0 | 0 |
| Example 3 | 90 | 10 | 0 | 0 | 60 | 40 | 0 | 0 |
| Example 4 | 80 | 20 | 0 | 0 | 50 | 50 | 0 | 0 |
| Example 5 | 90 | 10 | 0 | 0 | 50 | 50 | 0 | 0 |
| Example 6 | 100 | 0 | 0 | 0 | 40 | 60 | 0 | 0 |
| Example 7 | 90 | 10 | 0 | 0 | 80 | 20 | 0 | 0 |
| Example 8 | 100 | 0 | 0 | 0 | 30 | 70 | 0 | 0 |
| Example 9 | 90 | 10 | 0 | 0 | 20 | 80 | 0 | 0 |
| Example 10 | 100 | 0 | 0 | 0 | 50 | 50 | 0 | 0 |
| Example 11 | 100 | 0 | 0 | 0 | 50 | 50 | 0 | 0 |
| Comparative Example 1 | 70 | 30 | 0 | 0 | 70 | 30 | 0 | 0 |
| Comparative Example 2 | 100 | 0 | 0 | 0 | 100 | 0 | 0 | 0 |
| Comparative Example 3 | 100 | 0 | 0 | 0 | 50 | 50 | 0 | 0 |
| Comparative Example 4 | 100 | 0 | 0 | 0 | 50 | 50 | 0 | 0 |
| Comparative Example 5 | 80 | 0 | 0 | 20 | 90 | 10 | 0 | 0 |
| Comparative Example 6 | 85 | 0 | 15 | 0 | 45 | 55 | 0 | 0 |
| Comparative Example 7 | 100 | 0 | 0 | 0 | 80 | 0 | 20 | 0 |
| Comparative Example 8 | 100 | 0 | 0 | 0 | 80 | 0 | 0 | 20 |
| Comparative Example 9 | 100 | 0 | 0 | 0 | 0 | 100 | 0 | 0 |

[Table 5]

| Example B or Comparative Example B | Stretching step | | | | | | | |
|---|---|---|---|---|---|---|---|---|
| | MD stretching | | TD stretching | | Stretching magnification ratio (X/Y) | total stretching ratio (X x Y) | Heat treatment | |
| | Stretching. temperature (°C) | Stretching ratio (X) | Stretching temperature (°C) | Stretching ratio (Y) | | | Temperature (°C) | Relaxation rate (%) |
| Example 1 | 55 | 3.4 | 65 | 4.5 | 0.76 | 15.3 | 150 | 8.0 |
| Example 2 | 63 | 3.4 | 75 | 4.5 | 0.76 | 15.3 | 130 | 8.0 |
| Example 3 | 60 | 3.6 | 70 | 4.0 | 0.90 | 14.4 | 130 | 8.0 |
| Example 4 | 45 | 3.0 | 70 | 4.0 | 0.75 | 12.0 | 130 | 5.0 |
| Example 5 | 63 | 3.5 | 70 | 4.5 | 0.78 | 15.8 | 140 | 6.0 |
| Example 6 | 55 | 3.1 | 90 | 4.2 | 0.74 | 13.0 | 150 | 5.0 |
| Example 7 | 63 | 3.2 | 80 | 3.8 | 0.84 | 12.2 | 130 | 8.0 |
| Example 8 | 60 | 3.2 | 65 | 3.8 | 0.84 | 12.2 | 130 | 4.0 |
| Example 9 | 55 | 3.3 | 70 | 3.9 | 0.85 | 12.9 | 170 | 5.0 |
| Example 10 | 55 | 3.4 | 65 | 4.5 | 0.76 | 15.3 | 110 | 3.0 |
| Example 11 | 55 | 3.4 | 65 | 4.5 | 0.76 | 15.3 | 160 | 8.0 |
| Comparative Example 1 | 55 | 3.4 | 65 | 4.5 | 0.76 | 15.3 | 65 | 1.0 |
| Comparative Example 2 | 60 | 3.4 | 90 | 4.5 | 0.76 | 15.3 | 235 | 5.0 |
| Comparative Example 3 | 50 | 4.0 | 55 | 4.8 | 0.83 | 19.2 | 170 | 3.0 |
| Comparative Example 4 | 70 | 2.5 | 80 | 4.0 | 0.63 | 10.0 | 150 | 5.0 |
| Comparative Example 5 | 95 | 3.4 | 120 | 4.8 | 0.71 | 16.3 | 130 | 5.0 |
| Comparative Example 6 | 55 | 3.4 | 65 | 4.5 | 0.76 | 15.3 | 150 | 8.0 |

| Example B or Comparative Example B | Stretching step | | | | | | | |
|---|---|---|---|---|---|---|---|---|
| | MD stretching | | TD stretching | | Stretching magnification ratio (X/Y) | total stretching ratio (X x Y) | Heat treatment | |
| | Stretching. temperature (°C) | Stretching ratio (X) | Stretching temperature (°C) | Stretching ratio (Y) | | | Temperature (°C) | Relaxation rate (%) |
| Comparative Example 7 | 75 | 3.4 | 75 | 4.5 | 0.76 | 15.3 | 75 | 1.0 |
| Comparative Example 8 | 80 | 3.4 | 80 | 4.5 | 0.76 | 15.3 | 75 | 1.0 |
| Comparative Example 9 | 45 | 3.4 | 65 | 4.5 | 0.76 | 15.3 | 167 | 8.0 |

Test Example 2

The physical properties of the polyester-based films obtained in each example and comparative example were measured in the same manner as in Test Example 1. The results are shown in Table 6.

[Table 6]

| Example B or Comparative Example B | Properties of polyester-based film | | | | | | | | | | | | | |
|---|---|---|---|---|---|---|---|---|---|---|---|---|---|---|
| | Glass transition temperature (°C) | Film melting point (°C) | Film density (g/cm$^3$) | Breaking strength at elongation (MPa) | | Dry heat shrinkage rate (%) | | Thickness unevenness (%) | Piercing strength (N/μm) | Seal strength (200°C) (N/cm) | | Seal strength (220°C) (N/cm) | | Evaluation of vacuum heat insulating pouch under high-temperature environment (number) |
| | | | | MD | TD | MD | TD | | | Normal temperature | Under high-temperature environment (120°C × 10 days) | Normal temperature | Under high-temperature environment (120°C × 10 days) | |
| Example 1 | 49 | 179 | 1.338 | 163 | 156 | 1.8 | -0.3 | 5.2 | 0.57 | 10.7 | 9.4 | 9.4 | 7.7 | 0 |
| Example 2 | 60 | 193 | 1.332 | 172 | 158 | 4.8 | 0.6 | 5.1 | 0.62 | 5.9 | 4.8 | 7.5 | 6.8 | 0 |
| Example 3 | 58 | 183 | 1.333 | 174 | 143 | 5.6 | 0.6 | 6.0 | 0.61 | 9.2 | 7.5 | 8.9 | 7.5 | 0 |
| Example 4 | 31 | 158 | 1.330 | 147 | 131 | 5.1 | 2.6 | 7.6 | 0.52 | 10.5 | 8.3 | 8.4 | 5.8 | 0 |
| Example 5 | 53 | 171 | 1.334 | 105 | 125 | 4.2 | 1.7 | 5.7 | 0.60 | 10.6 | 8.6 | 7.3 | 5.1 | 0 |
| Example 6 | 53 | 182 | 1.335 | 141 | 103 | 1.3 | 1.5 | 8.1 | 0.55 | 8.6 | 5.3 | 7.5 | 4.7 | 0 |
| Example 7 | 65 | 197 | 1.331 | 121 | 103 | 5.3 | 1.7 | 9.0 | 0.58 | 2.9 | - | 7.3 | 4.3 | 0 |
| Example 8 | 54 | 192 | 1.325 | 134 | 112 | 6.1 | 4.5 | 5.9 | 0.49 | 5.4 | 4.2 | 7.1 | 5.3 | 1 |
| Example 9 | 35 | 186 | 1.357 | 94 | 84 | 1.8 | 0.0 | 5.5 | 0.43 | 5.0 | 4.1 | 8.2 | 6.3 | 2 |
| Example 10 | 49 | 179 | 1.321 | 182 | 170 | 8.6 | 9.4 | 6.7 | 0.54 | 10.0 | 8 | 5.5 | 4.1 | 0 |
| Example 11 | 49 | 179 | 1.342 | 103 | 99 | 0.8 | -0.4 | 7.3 | 0.40 | 6.7 | 4.5 | 5.2 | 4.0 | 2 |
| Comparative Example 1 | 41 | No melting point | 1.317 | 140 | 156 | - | - | 9.3 | 0.13 | 11.1 | 7.3 | 8.1 | 5.8 | 10 |
| Comparative Example 2 | 78 | 254 | 1.387 | 186 | 193 | 0.3 | -0.3 | 5.1 | 0.39 | Sealing impossible | Sealing impossible | Sealing impossible | Sealing impossible | 6 |
| Comparative Example 3 | 49 | 180 | 1.373 | 81 | 70 | 0.8 | -0.4 | 8.2 | 0.31 | 5.0 | 3.0 | 3.6 | 1.9 | 3 |
| 1.'iJ Comparative Example 4 | 49 | 179 | 1.318 | 186 | 175 | 8.1 | 7.9 | 10.8 | 0.28 | 5.5 | 2.6 | 4.9 | 2.4 | 5 |

| Example B or Comparative Example B | Properties of polyester-based film | | | | | | | | | | | | | | |
|---|---|---|---|---|---|---|---|---|---|---|---|---|---|---|---|
| | Glass transition temperature (°C) | Film melting point (°C) | Film density (g/cm$^3$) | Breaking strength at elongation (MPa) | | Dry heat shrinkage rate (%) | | Thickness unevenness (%) | Piercing strength (N/$\mu$m) | Seal strength (200°C) (N/cm) | | Seal strength (220°C) (N/cm) | | Evaluation of vacuum heat insulating pouch under high-temperature environment (number) |
| | | | | MD | TD | MD | TD | | | Normal temperature | Under high-temperature environment (120°C × 10 days) | Normal temperature | Under high-temperature environment (120°C × 10 days) | |
| Comparative Example 5 | 76 | 182 | 1.314 | 193 | 187 | 3.4 | 1.8 | 11.1 | 0.48 | 4.4 | 2.0 | 3.7 | 2.0 | 2 |
| Comparative Example 6 | 29 | 164 | 1.322 | 70 | 90 | 1.5 | -0.4 | 7.9 | 0.24 | 7.5 | 4.7 | 6.7 | 4.6 | 7 |
| Comparative Example 7 | 65 | No melting point | 1.305 | 55 | 65 | - | - | 12.3 | 0.12 | 12.2 | 7.1 | 10.1 | 7 | 11 |
| Comparative Example 8 | 70 | No melting point | 1.310 | 58 | 76 | - | - | 9.6 | 0.09 | 12.8 | 7.9 | 11.2 | 7.9 | 13 |
| Comparative Example 9 | 37 | 224 | 1.317 | 161 | 149 | 1.7 | -0.4 | 6.7 | 0.59 | Sealing impossible | Sealing impossible | Sealing impossible | Sealing impossible | 0 |

As is clear from the results in Table 6, the polyester-based films of Examples B1 to B11 have excellent pinhole resistance and excellent heat sealability, and also have excellent heat-sealing properties even when stored for a long period of time in a high-temperature environment.

On the other hand, since the polyester-based film of Comparative Example B1 used a polyester resin in which the amount of terephthalic acid among all acid components did not meet the range specified in the present invention, the crystallinity was low, the melting point and the density at the time of film formation did not meet the range specified in the present invention, and the film was inferior in pinhole resistance.

Since, in the polyester-based film of Comparative Example B2, a polyester resin that did not contain 1,4-butanediol was used, the glass transition temperature, melting point, and film density exceeded the ranges of the present invention, the film was inferior in pinhole resistance, and heat sealing was not possible.

Since the polyester-based film of Comparative Example B3 was produced in a high total stretching ratio during stretching and the film density exceeded the range specified in the present invention, the film was inferior in breaking strength at elongation, pinhole resistance, and seal strength.

Since the polyester-based film of Comparative Example B4 was prepared in a low total stretching ratio during stretching and the film density did not satisfy the range specified in the present invention, the dry heat shrinkage rate was high and film was inferior in pinhole resistance and seal strength.

Since, in the polyester-based film of Comparative Example B5, a polyester resin in which the amount of 1,4-butanediol among all glycol components did not meet the range specified in the present invention was used, the glass transition temperature and the film density were outside the ranges specified in the present invention, and the film was inferior in pinhole resistance and seal strength.

Since the polyester-based film of Comparative Example B6 had a glass transition temperature that did not meet the range specified in the present invention, the film was inferior in breaking strength at elongation and pinhole resistance.

In the polyester-based films of Comparative Examples B7 and B8, polyester resins containing no 1,4-butanediol were used. Accordingly, the melting point and film density did not meet the ranges specified in the present invention, and the films were inferior in breaking strength at elongation and pinhole resistance.

Since the polyester-based film of Comparative Example B9 used a polyester resin in which the amount of 1,4- among all glycol components exceeded the range specified in the present invention, the melting point and the film density were outside the range specified in the present invention, and heat sealing was not possible.

## Claims

1.  A stretched polyester-based film comprising a polyester resin, wherein

    (1) the polyester resin includes terephthalic acid as an acid component and ethylene glycol as a glycol component;
    (2) the melting point is 155°C to 210°C; and
    (3) the density is 1.320 to 1.380.

2.  The stretched polyester-based film according to claim 1, wherein a glass transition temperature is 30°C to 68°C.

3.  The stretched polyester-based film according to claim 1 or 2, wherein a thickness unevenness A calculated by a following formula (1):

$$\text{Thickness unevenness A (\%)} = [(T_{max} - T_{min})/T_{ave}] \times 100 \ ... \ (1)$$

    (here, Tmax indicates a maximum thickness in four directions (0°, 45°, 90° and 135°) of the polyester film, Tmin indicates a minimum thickness in the four directions (0°, 45°, 90° and 135°) of the polyester film, and Tave indicates an average thickness in the four directions (0°, 45°, 90° and 135°) of the polyester film) is 10% or less.

4.  The stretched polyester-based film according to any one of claims 1 to 3, wherein a breaking strength at elongation is 110 MPa or more.

5.  The stretched polyester-based film according to any one of claims 1 to 4, wherein a dry heat shrinkage rate in TD and MD directions is 6.0% or less.

**6.** The stretched polyester-based film according to any one of claims 1 to 5, wherein a piercing strength is 0.50 N/$\mu$m or more.

**7.** The stretched polyester-based film according to any one of claims 1 to 6, wherein a seal strength after heat treatment at 120°C for 10 days is 4.5 N/cm or more.

**8.** The stretched polyester-based film according to any one of claims 1 to 7, further including 1,4-butanediol as the glycol component.

**9.** The stretched polyester-based film according to any one of claims 1 to 8, wherein
in the polyester resin,

(a) terephthalic acid is contained in an amount of 80 mol% to 100 mol% of the total amount of 100 mol% of all acid components in the polyester resin; and
(b) ethylene glycol is contained in an amount of 10 mol% to 85 mol% of the total amount of 100 mol% of all glycol components in the polyester resin.

**10.** The stretched polyester-based film according to any one of claims 1 to 9 which is used for a sealant.

**11.** A laminated film comprising the stretched polyester-based film according to any one of claims 1 to 10 and another layer, the stretched polyester-based film being arranged in an outermost layer.

**12.** A package including the stretched polyester-based film according to any one of claims 1 to 10, wherein the stretched polyester-based films are heat-sealed each other with contents filled in the package.

**13.** The package according to claim 12, wherein the inside of the package is vacuum.

**14.** The package according to claim 12 or 13, wherein the contents include a fibrous substance and the package is used as a heat insulating material.

**15.** A method for manufacturing a polyester-based film according to any one of claims 1 to 10 from an unstretched sheet including a polyester resin, the method comprising:
a step of stretching the unstretched sheet such that a total stretching ratio ($X \times Y$), which is a mathematical product of a stretching ratio ($X$) in a sheet flow (MD) direction and a stretching ratio ($Y$) in a sheet width (TD) direction, satisfies 9.8 to 12.0 or 12.0 to 16.5.

**16.** The manufacturing method according to claim 15, wherein the stretching is simultaneous biaxial stretching.

**17.** The manufacturing method according to claim 15 or 16, further comprising a pre-stretching step of stretching the unstretched sheet in advance in the MD direction at a ratio of 1.05 times to 1.20 times prior to stretching.

[Fig. 1]

[Fig. 2]

[Fig. 3]

[Fig. 4]

[Fig. 5]

[Fig. 6]

[Fig. 7]

## INTERNATIONAL SEARCH REPORT

| | International application No. |
|---|---|
| | PCT/JP2019/037662 |

A. CLASSIFICATION OF SUBJECT MATTER
Int.Cl. C08G63/183(2006.01)i, C08J5/16(2006.01)i, C08J5/18(2006.01)i

According to International Patent Classification (IPC) or to both national classification and IPC

B. FIELDS SEARCHED

Minimum documentation searched (classification system followed by classification symbols)
Int.Cl. C08G63/183, C08J5/16, C08J5/18

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 9-309146 A (TORAY INDUSTRIES, INC.) 02 December 1997, example 3<br>(Family: none) | 1, 11, 15<br>2-10, 12-14,<br>16, 17 |
| X<br><br>A | JP 2004-358798 A (UNITIKA LTD.) 24 December 2004, paragraphs [0034], [0046]-[0050], example 3<br>(Family: none) | 1, 2, 4-9, 15,<br>16<br>3, 10-14, 17 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>13.11.2019 | Date of mailing of the international search report<br>26.11.2019 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

**INTERNATIONAL SEARCH REPORT**

| International application No. |
| --- |
| PCT/JP2019/037662 |

C (Continuation). DOCUMENTS CONSIDERED TO BE RELEVANT

| Category* | Citation of document, with indication, where appropriate, of the relevant passages | Relevant to claim No. |
| --- | --- | --- |
| X<br>A | JP 3-86729 A (TEIJIN LTD.) 11 April 1991,<br>comparative example 6<br>& US 5473004 A, comparative example 6 & EP 415383<br>A2 & KR 10-1991-0004719 A | 1, 5<br>2-4, 6-17 |
| Y | JP 2017-66405 A (UNITIKA LTD.) 06 April 2017,<br>claims 1-5, paragraphs [0009], [0015], examples 1-<br>13<br>& US 2018/0272594 A1, claims 10-21, paragraphs<br>[0014], [0053], example 1 & EP 3357671 A1 & CN<br>107107456 A & KR 10-2017-0121295 A | 1-17 |
| Y | WO 2018/150997 A1 (TOYOBO CO., LTD.) 23 August<br>2018, claims 1-6, examples 1-10<br>& TW 201834864 A | 1-17 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014175313 A

- JP 2017165059 A